# EUROPEAN PATENT APPLICATION

(11) **EP 1 596 238 A2**
(43) Date of publication of application: **16.11.2005**
(21) Application number: 05009608.0
(22) Date of filing: 02.05.2005
(51) Int. Cl.: G02B 21/00

(54) **Optical stimulation apparatus and optical-scanning examination apparatus**

(30) Priority: 13.05.2004 JP 2004143579
(71) Applicant: Olympus Corporation, Tokyo 151-0072 (JP)
(72) Inventor: Nakata, Tatsuo, Hino-shi Tokyo 191-0024 (JP)
(74) Representative: von Hellfeld, Axel

(57) **Abstract**

The invention provides an optical stimulation apparatus including a light source (2); a scanning unit (4) that scans light from the light source; and an objective optical system (12) that images the light scanned by the scanning unit onto a specimen (A). The scanning unit (4) includes an acousto-optic device that varies the diffraction angle in response to a vibration frequency input thereto.

## Description

### BACKGROUND OF THE INVENTION

### 1. FIELD OF THE INVENTION

The present invention relates to an optical stimulation apparatus and to an optical-scanning examination apparatus.

### 2. DESCRIPTION OF RELATED ART

Conventionally, as an optical microscope in which a specimen such as a living organism can be subjected to magnified in-vivo examination, the optical fiber microscope disclosed in Japanese Unexamined Patent Application Publication No. 2003-344777 (Fig. 1 therein) has been suggested. This microscope includes a first objective lens that images laser light emitted from a laser light source onto one end of an optical fiber bundle, and a second objective lens disposed at the other end of the optical fiber bundle, and is configured such that the laser light from the laser light source is two-dimensionally scanned on the specimen with a laser-light scanner.

Examples of the laser-light scanner include galvano mirrors and polygon mirrors which vary the reflection direction of the laser light by changing the mirror angle, disk-scanning type devices in which the position of a light spot on the specimen is moved by changing the position of a pinhole through which the laser light passes, and the like.

However, the oscillation frequency of galvano mirrors is generally about 500 Hz, and therefore, it is difficult to scan at a speed higher than this. Also, detectors for detecting the angle of the galvano mirrors must be provided, which tends to increase the overall size of the apparatus.

In addition, increasing the oscillation frequency reduces the light intensity, and hence it is necessary to provide a high-sensitivity detector, which results in the problem of higher costs. Increasing the intensity of the illumination light to compensate for the detector sensitivity, may result in damage to the specimen, which is undesirable.

Furthermore, galvano mirrors that oscillate at high speed, such as resonant galvano mirrors, are also available; however, since the detector sensitivity is limited, they are not effective for use in acquiring images, and they also suffer from the drawback that the light beam cannot be stopped at a specific position.

Polygon mirrors suffer from the same drawbacks.

### BRIEF SUMMARY OF THE INVENTION

In light of the drawbacks described above, it is an object of the present invention to provide an optical stimulation apparatus and an optical-scanning examination apparatus in which a position where an optical stimulus is applied to a specimen can be scanned at high speed and in which the optical stimulus position can be fixed at a specific position.

In order to achieve the above-described object, the present invention provides the following solutions.

According to a first aspect, the invention provides an optical stimulation apparatus including a light source, a scanning unit that scans light from the light source, and an objective optical system that images the light scanned by the scanning unit onto a specimen. The scanning unit includes an acousto-optic device that varies the diffraction angle in response to a vibration frequency input thereto.

According to this aspect, the light emitted from the light source is scanned by the scanning unit and is imaged onto the specimen by the objective optical system. In this case, by operating the scanning unit, which is formed of an acousto-optic device, the light from the light source is diffracted at a diffraction angle corresponding to the input vibration frequency and is emitted therefrom. By using an acousto-optic device, the light can be scanned at a frequency of about 1 × 10⁶ Hz, which allows the optical stimulus position to be moved at high speed. As a result, it is possible to examine the response of the specimen to a high-speed optical stimulus. Also, by fixing the input vibration frequency, the diffraction angle can be fixed at a desired value, which allows a specific stimulus position to be illuminated with light.

In the above-described aspect, the scanning unit preferably includes a first acousto-optic device that varies the diffraction angle in one direction in response to a frequency of the high-frequency vibration input thereto, and a second acousto-optic device that diffracts the light from the first acousto-optic device in a direction crossing the diffraction direction of the first acousto-optic device.

With this configuration, it is possible to two-dimensionally change the position of the optical stimulus by moving the stimulus position that was moved in one direction by the first acousto-optic device in another direction crossing the first direction, using the second acousto-optic device. Also, by continuously varying the vibration frequency input to each acousto-optic device, it is possible to continuously move the optical stimulus position in the intersecting directions, which allows two-dimensional scanning of the light beam.

According to a second aspect, the present invention provides an optical-scanning examination apparatus including a first light source; a first scanning unit that scans light from the first light source; an objective optical system that images the light scanned by the first scanning unit onto a specimen; a photodetector that detects return light returning via the objective optical system and the first scanning unit; a second light source; a second scanning unit that scans light from the second light source; and an optical-axis combining unit that makes the optical axis of the light scanned by the second scanning unit coincident with the optical axis of the light from the first light source. The second scanning unit includes an acousto-optic device that varies the diffraction angle in response to a frequency of the high-frequency vibration input thereto.

According to this aspect, the light from the first light source is scanned by the first scanning unit and is imaged onto the specimen by the objective optical system. The return light emitted from the specimen returns along the same optical path via the objective optical system and the first scanning unit, and is detected by the photodetector. Also, the light emitted from the second light source is scanned by the second scanning unit and is introduced along the same optical axis as the optical axis of the first light source by the optical-axis combining unit. Then, the light passes through the same objective optical system as the light from the first light source and is scanned on the specimen. In this case, since the second scanning unit is formed of an acousto-optic device, optical stimulation is performed at high speed, which allows images acquired as a result thereof to be detected by the photodetector.

In the above-described aspect, the second scanning unit preferably includes a first acousto-optic device that changes the diffraction angle in one direction in response to a frequency of the high-frequency vibration input thereto; and a second acousto-optic device that diffracts the light from the first acousto-optic device in a direction crossing the diffraction direction of the first acousto-optic device.

With this configuration, it is possible to detect, using the photodetector, images of the specimen to which the optical stimulus is two-dimensionally applied at high speed.

Furthermore, in the above-described aspect, the first scanning unit is preferably a disk-type scanning unit in which a focusing disk and a pinhole disk are rotated.

With this configuration, the specimen can be scanned at high speed by multiple pinholes provided in the pinhole disk, and the response of the specimen to an optical stimulus can be examined.

According to the present invention, by rapidly changing the vibration frequency applied to an acousto-optic device, it is possible to acquire the response of a specimen in which the position of an optical stimulus is moved at high speed. Moreover, by fixing the vibration frequency applied to the acousto-optic device at a predetermined value, it is possible to continuously irradiate a specific optical stimulus position with light. Accordingly, it is possible to obtain the response of a specimen when continuously irradiated with light at that optical stimulus position.

### BRIEF DESCRIPTION OF THE SEVERAL VIEWS OF THE DRAWINGS

Fig. 1 is a schematic diagram of an optical stimulation apparatus according to an embodiment of the present invention.

Figs. 2A to 2C show driving patterns of acousto-optic devices in the optical stimulation apparatus in Fig. 1 and a light scanning pattern on a specimen.

Fig. 3 is a schematic diagram of a modification of the optical stimulation apparatus in Fig. 1.

Fig. 4 is a schematic diagram of an optical-scanning examination apparatus according to an embodiment of the present invention.

Fig. 5 is a schematic diagram of a modification of the optical-scanning examination apparatus in Fig. 3.

### DETAILED DESCRIPTION OF THE INVENTION

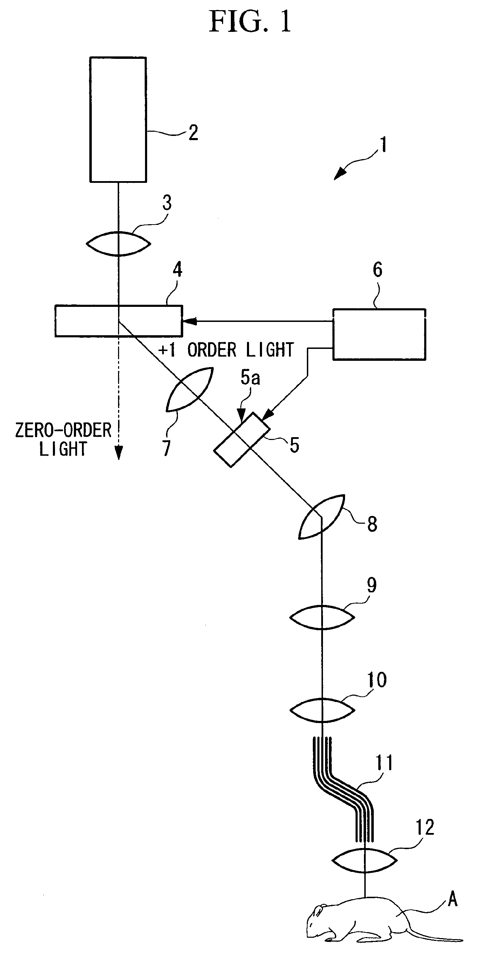

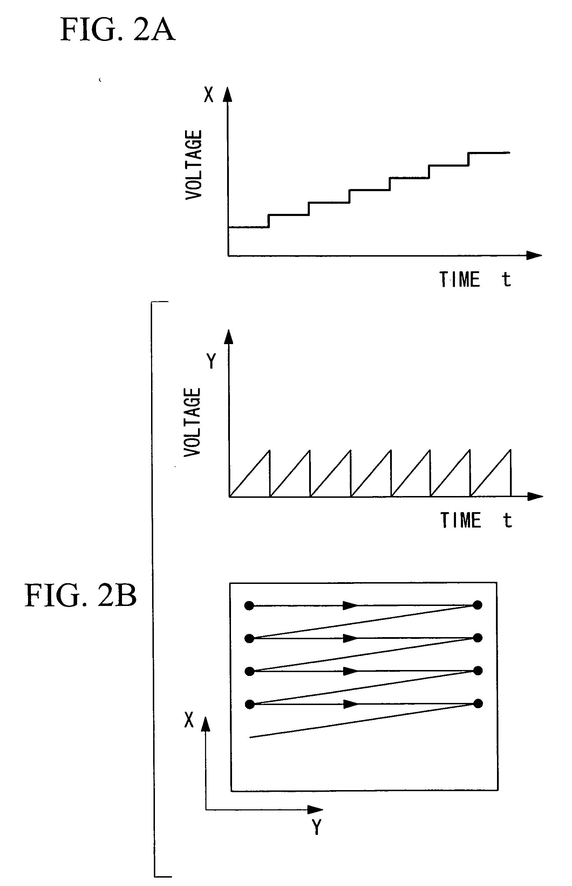

An optical stimulation apparatus according to a first embodiment of the present invention is described below with reference to Fig. 1 and Figs. 2A to 2C.

As shown in Fig. 1, the optical stimulation apparatus 1 of this embodiment includes a laser light source 2 that emits laser light; a beam expander 3 that expands the laser beam; a first acousto-optic device (AOD) 4; a second acousto-optic device 5; an AOD control apparatus 6 that controls the acousto-optic devices 4 and 5; a telescope lens 7 that maintains the beam emitted from the first acousto-optic device 4 at a specific beam diameter; a pupil-projection lens 8 that forms an intermediate image of the light emitted from the second acousto-optic device 5; an imaging lens 9 that focuses the light forming the intermediate image by the pupil-projection lens 8; a first objective lens 10 that images the light focused by the imaging lens 9; an optical fiber bundle 11 of which one end is disposed at the image position of the first objective lens 10; and a second objective lens 12 disposed at the other end of the optical fiber bundle 11. The second objective lens 12 images the light carried by the optical fiber bundle 11 at an examination site of a specimen A, such as a small experimental animal, located opposite the distal end of the second objective lens 12.

By supplying a voltage from the AOD control apparatus 6 to a piezo transducer (not shown) included in the first acousto-optic device 4, high-frequency vibrations are applied to a crystal (for example, lead molybdate) via the piezo transducer, to vary the diffraction angle of light transmitted through the crystal in a single direction, for example, a direction parallel to the plane of the drawing in Fig. 1. Zero-order light, which is transmitted straight through with respect to the incident light, is also emitted from the first acousto-optic device 4; in this embodiment, however, the zero-order light is not used, but the +1 order light adjacent thereto is used.

The second acousto-optic device 5 also varies the diffraction angle of the light in one direction according to the high-frequency vibrations that the piezo transducer generates; however, it is disposed so as to vary the diffraction angle in a direction intersecting the direction in which the diffraction angle is varied by the first acousto-optic device 4, for example, in a direction orthogonal thereto. Similar to the first acousto-optic device 4, the second acousto-optic device 5 is configured so as to use the +1 order light and not the zero-order light in this embodiment.

When the AOD control apparatus 6 two-dimensionally scans the laser light from the laser light source 2 onto the specimen A, voltage signals that vary with a fixed period are supplied to the first and second acousto-optic devices 4 and 5, respectively. In the case of one-dimensional scanning of the specimen A, a voltage signal input to one device, the acousto-optic device 4 (5), is fixed, and the voltage signal to the other device, the acousto-optic device 5 (4), is varied at the fixed period. Furthermore, to fix the incident position of the laser light incident on the specimen A, the voltage signals input to both acousto-optic devices 4 and 5 are fixed. In this case, from the relationship between the frequency of the high-frequency vibrations generated by the piezo transducer and the diffraction angle determined in response thereto, voltage signals for achieving the desired diffraction angles are determined and are output to the corresponding acousto-optic devices 4 and 5.

Since the zero-order beam produced by the first acousto-optic device 4 is not used, the second acousto-optic device 5 is disposed at a position such that the +1-order beam passes through an aperture section 5a at the incident side thereof, without letting the zero-order beam pass therethrough. Also, the aperture section 5a has a diameter that allows the first-order beam over the entire range of diffraction angles modulated in response to the vibration frequencies generated by the piezo transducer to be incident on the second acousto-optic device 5.

The operation of the optical stimulation apparatus 1 of this embodiment, having such a configuration, will be described below.

With the optical stimulation apparatus 1 according to this embodiment, the beam diameter of the laser light emitted from the laser light source 2 is expanded by the beam expander 3 and is incident on the first acousto-optic device 4. At the first acousto-optic device 4, a +1 order beam is emitted at a diffraction angle according to the voltage signal input from the AOD control apparatus 6, is collimated by the telescope lens 7, and is incident on the second acousto-optic device 5. At the second acousto-optic device 5, the +1 order beam from the first acousto-optic device 4 is input and a +1 order beam is emitted therefrom at a diffraction angle according to a voltage signal input from the AOD control apparatus 6.

Then, the light emitted from the second acousto-optic device 5 passes through the pupil projection lens 8, the imaging lens 9, and the objective lens 10 to be imaged onto one end of the optical fiber bundle 11, and propagates through the optical fiber bundle 11. The light is then re-imaged onto the specimen A by the second objective lens 12 disposed at the other end of the optical fiber bundle 11. With this configuration, the specimen A is irradiated with light from the laser light source 2, which allows an optical stimulus to be applied thereto.

Since the second objective lens 12 for the specimen A is disposed at the end of the optical fiber bundle 11, the position and orientation of the second objective lens 12 can be freely adjusted by bending the optical fiber bundle 11. Therefore, the second objective lens 12 can be placed at a suitable position according to the shape of the specimen A and the location of the optical stimulus, which allows the optical stimulus to be accurately applied to a desired location.

In this case, since the diffraction direction of the first acousto-optic device 4, that is, the direction in which the diffraction angle of the +1 order beam emitted from the first acousto-optic device 4 is varied, and the diffraction direction of the second acousto-optic device 5 are arranged so as to be mutually orthogonal, the light emitted from the second acousto-optic device 5 can cover a wide two-dimensional region. Therefore, when setting the voltage signal input from the AOD control apparatus 6 to a specific value, the frequency of the high-frequency vibrations generated in response thereto is also set to a fixed value. As a result, the optical stimulus position of light irradiating the specimen A can be kept fixed at a specific position.

Also, by fixing the voltage signal input to the first acousto-optic device 4 from the AOD control apparatus 6 while varying only the voltage signal input to the second acousto-optic device 5, it is possible to move the optical stimulus position one-dimensionally in a straight line in a direction orthogonal to the plane of the drawing at a specific position in a direction parallel to the plane of the drawing, which is determined in response to the voltage signal input to the first acousto-optic device 4. Conversely, by fixing the voltage signal input to the second acousto-optic device 5 while varying only the voltage signal input to the first acousto-optic device 4, it is possible to move the optical stimulus position one-dimensionally in a straight line parallel to the plane of the drawing at a specific position in a direction orthogonal to the plane of the drawing, which is determined according to the voltage signal input to the second acousto-optic device 5.

Furthermore, by varying the voltage signals input to both acousto-optic devices 4 and 5 from the AOD control apparatus 6, it is possible to move the optical stimulus position two-dimensionally. For example, as shown in Fig. 2A to Fig. 2C, by varying the voltage signal input to the first acousto-optic device 4 in a step-wise manner (Fig. 2A) and by varying the voltage signal input to the second acousto-optic device 5 in a triangular waveform (Fig. 2B), it is possible to two-dimensionally scan the optical stimulus position on the specimen A, as shown in Fig. 2C.

In this case, with the optical stimulation apparatus 1 according to the present invention, by varying the vibration frequency, it is possible to change the diffraction angle at high speed, thus moving the optical stimulus position at high speed. Therefore, using the system in applications such as a case where the optical stimulus position is moved at high speed and an electrical signal obtained from the specimen is observed enables examination to be carried out more effectively. Also, with the acousto-optic devices 4 and 5, detectors are not needed, unlike the case where galvano mirrors are used, which affords an advantage in that the scanning speed is not limited by detector sensitivity and, furthermore, it is possible to make the apparatus more compact.

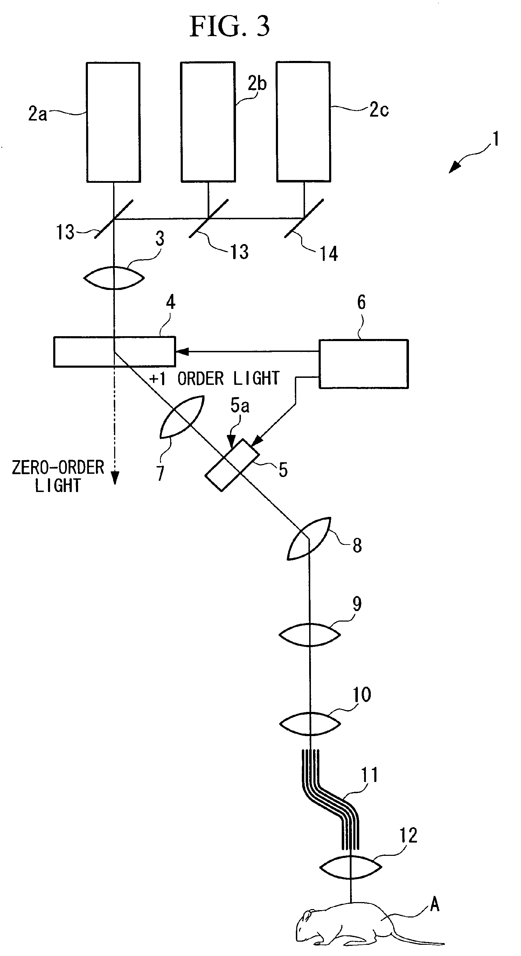

In the optical stimulation apparatus 1 according to this embodiment, a description has been given of a case where a single laser light source 2 is used. However, instead of this, as shown in Fig. 3, a plurality of laser light sources 2a to 2c with different wavelengths may be used. In this case, the optical axes of the light beams from the laser light sources 2a to 2c may be combined by dichroic mirrors 13 and a mirror 14.

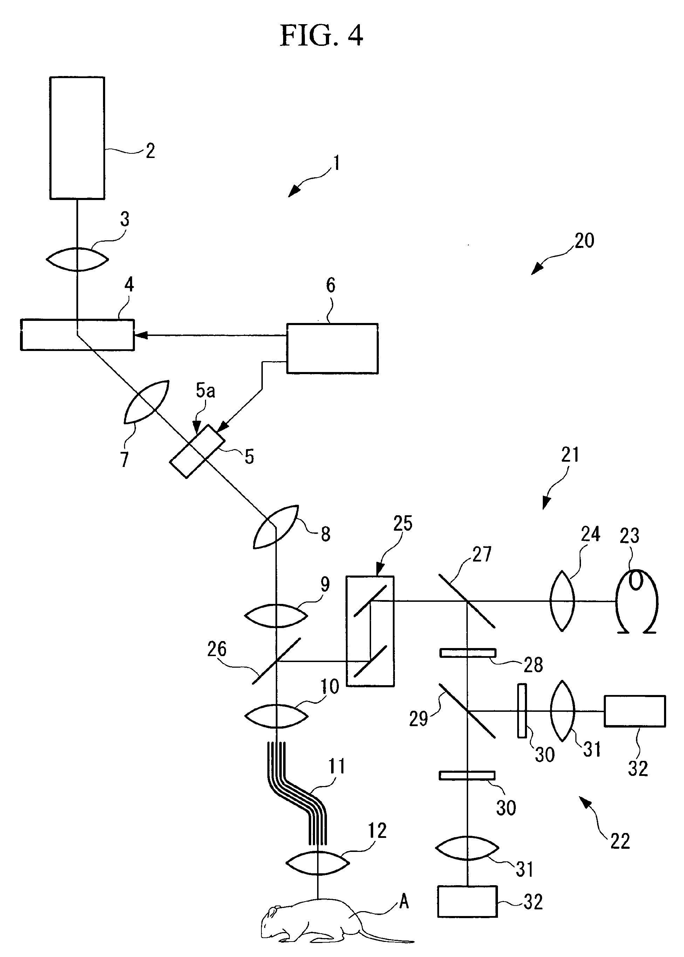

Next, an optical scanning microscope apparatus 20 according to an embodiment of the present invention will be described below with reference to Fig. 4.

As shown in Fig. 4, the optical-scanning examination apparatus 20 according to this embodiment includes the optical stimulation apparatus 1 shown in Fig. 1, an illumination optical system 21, and an examination optical system 22. The illumination optical system 21 includes, for example, a halogen lamp 23 that emits near-infrared light serving as excitation light, a collimator lens for converting the light from the halogen lamp 23 into a collimated beam, adjacent galvano mirrors 25 that two-dimensionally scan the collimated beam of light emitted from the collimator lens 24, and a half-mirror (optical-axis combining unit) 26 that combines the light scanned by the adjacent galvano mirrors 25 with the optical axis between the imaging lens 9 and the objective lens 10 of the optical stimulation apparatus 1.

The examination optical system 22 includes a dichroic mirror 27 that splits off fluorescence returning from the specimen A from the optical axis between the half-mirror 25 and the collimator lens 24; a barrier filter 28 that transmits fluorescence while cutting excitation light and light used as an optical stimulus; a dichroic mirror 29 that splits returning fluorescence passing through the barrier filter 28 into each wavelength; and two sets of fluorescence filters 30, focusing lenses 31, and photodetectors 32. The photodetectors 32 are photomultiplier tubes, for example.

The operation of the optical-scanning examination apparatus 20 according to this embodiment, having such a configuration, will be described below.

With the optical-scanning examination apparatus 20 according to this embodiment, the near-infrared light emitted from the halogen lamp 23 is collimated by passing through the collimator lens 24, is two-dimensionally scanned by the adjacent galvano mirrors 25, and is made incident on the first objective lens 10 by the half-mirror 26. The light imaged onto the end surface of the optical fiber bundle 11 by the first objective lens 10 propagates through the optical fiber bundle 11 and is re-imaged onto the specimen A by the second objective lens 12. The examination site irradiated with near-infrared light on the specimen A then generates fluorescence.

The generated fluorescence returns via the second objective lens 12, the optical fiber bundle 11, and the first objective lens 10, and is returned to the illumination optical system 21 by the half-mirror 26. The fluorescence then passes through the adjacent galvano mirrors 25, is split off from the illumination optical system 21 by the dichroic mirror 27, passes through the barrier filter 28 to reach the dichroic mirror 29, passes through the fluorescence filters 30 and the focusing lenses 31, and is detected by the photodetectors 32.

By operating the optical stimulation apparatus 1 while performing examination of the fluorescence generated in the specimen A with the illumination optical system 21 and the examination optical system 22, it is possible to examine the response of the specimen A when performing optical stimulation of a specific position while moving the stimulus position at high speed, by means of the images acquired by the examination optical system 22.

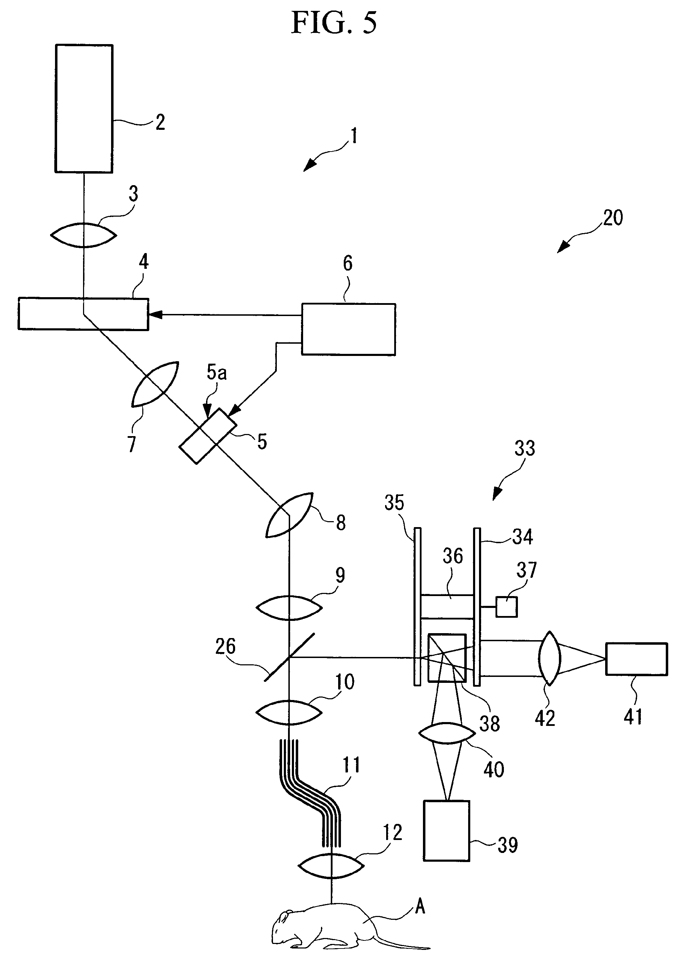

In the optical-scanning examination apparatus 20 according to this embodiment, the light from the light source 23 is two-dimensionally scanned by the adjacent galvano mirrors 25. Instead of this, however, as shown in Fig. 5, a disk-scanning-type scanning unit 33 may be provided. In this scanning unit 33, a focusing disk 34 and a pinhole disk 35 are connected via a drum 36, and the scanning unit 33 is rotated in one direction by means of a motor 37.

The focusing disk 34 has a plurality of Fresnel lenses formed on one side of a glass substrate, and these Fresnel lenses are arranged so as to be staggered by a predetermined distance in the radial direction. The pinhole disk 35 has a plurality of pinholes in a substrate, and these pinholes are also arranged so as to be staggered by a predetermined distance in the radial direction. A dichroic mirror 38 is disposed between the focusing disk 34 and the pinhole disk 35. Fluorescence returning via the first objective lens 10, the half-mirror 26, and the pinhole disk 35 is reflected by the dichroic mirror 38 and is detected by a photodetector 39. In the figure, reference numeral 40 represents a focusing lens, reference numeral 41 represents a light source, and reference numeral 42 represents a collimator lens.

By configuring the system in this way, the light from the light source 41 can pass through the plurality of pinholes simultaneously, thus allowing the specimen A to be scanned with a plurality of light spots, and it is therefore possible to acquire fluorescence images of the specimen A at high speed.

## Claims

1. An optical stimulation apparatus comprising:
a light source;
a scanning unit that scans light from the light source; and
an objective optical system that images the light scanned by the scanning unit onto a specimen;
wherein the scanning unit includes an acousto-optic device for varying a diffraction angle in response to a vibration frequency input thereto.

2. An optical stimulation apparatus according to Claim 1, wherein the scanning unit includes a first acousto-optic device for varying the diffraction angle in one direction in response to a vibration frequency input thereto, and a second acousto-optic device that diffracts the light from the first acousto-optic device in a direction crossing the diffraction direction of the first acousto-optic device.

3. An optical-scanning examination apparatus comprising:
a first light source;
a first scanning unit that scans light from the first light source;
an objective optical system that images the light scanned by the first scanning unit onto a specimen;
a photodetector that detects return light returning via the objective optical system and the first scanning unit;
a second light source;
a second scanning unit that scans light from the second light source; and
an optical-axis combining unit that makes the optical axis of the light scanned by the second scanning unit coincident with the optical axis of the light from the first light source;
wherein the second scanning unit includes an acousto-optic device that varies the diffraction angle in response to a vibration frequency input thereto.

4. An optical-scanning examination apparatus according to Claim 3, wherein the second scanning unit includes:
a first acousto-optic device that varies the diffraction angle in one direction in response to a vibration frequency input thereto; and
a second acousto-optic device that diffracts the light from the first acousto-optic device in a direction crossing the diffraction direction of the first acousto-optic device.

5. An optical-scanning examination apparatus according to Claim 3, wherein the first scanning unit is a disk-type scanning unit in which a focusing disk and a pinhole disk are rotated.
